# EUROPEAN PATENT SPECIFICATION

(11) **EP 2 428 538 B1**
(45) Date of publication and mention of the grant of the patent: **11.09.2019**
(21) Application number: 10772056.7
(22) Date of filing: 30.04.2010
(51) Int. Cl.: C09D 175/04, C09D 163/00, C09D 133/04, B60R 13/08, E04B 1/74

(54) **FORMULATION WITH INSULATING PROPERTIES**
FORMULIERUNG MIT ISOLIERENDEN EIGENSCHAFTEN
COMPOSITION À PROPRIÉTÉS ISOLANTES

(30) Priority: 05.05.2009 ES 200901148
(43) Date of publication of application: 14.03.2012
(73) Proprietor: Vipeq Hispania 2008, S.L., 31192 Tajonar (Navarra) (ES)
(72) Inventor: MILLÁN ADRIÁN, Ramón Simón, 31192 Tajonar (Navarra) (ES); OTAMENDI ARRECHE, María Jesús, 31192 Tajonar (Navarra) (ES)
(74) Representative: Ungria López, Javier
(86) International application number: PCT/ES2010/070282
(87) International publication number: WO 2010/128190

(56) References cited:
- EP-A1- 1 158 035
- ES-A1- 2 176 105
- ES-A1- 2 288 096
- ES-T3- 2 248 636
- GB-A- 1 092 987
- GB-A- 2 254 084
- US-A- 3 457 202
- US-A- 4 337 320
- US-A- 5 464 494
- US-A1- 2003 064 834

## Description

### TECHNICAL FIELD

The present invention relates to a formulation with fireproof and waterproof properties particularly suitable for its use as a decorative material, as well as thermal and acoustic insulation.

### STATE OF THE ART PRIOR TO THE INVENTION

Currently it is very common in the construction sector, to apply materials to insulate both thermally and acoustically the surfaces where they are applied. Among the most commonly used materials cork is worth mentioning, because of the optimal properties said material has.

Often, when using cork, it is applied in the form of plates, which must be trimmed to conform to the surfaces where they will be applied. For example, in the patent application FR2618821 describes a method of manufacturing cement-, cork- and resin-based panels, with insulating properties. FR2535247 also describes panels comprising an outer layer of fiber cement or the like, an outer layer of resin and at least one inner layer of agglomerated cork.

The disadvantage of this mode of employment is, on the one hand, the high time required for cutting the plates and on the other hand, the expenditure derived from the material that is wasted on the cuts. Furthermore, the fact of using plates implies that they have to be fixed on the support surface in order to prevent them from moving and reducing therefore their insulating capacity.

Another possible method of application of the cork is by projection, for which the cork is used as a composition, projected onto the surfaces you want to insulate. The drawback of this solution is that the current compositions require a slow manufacturing process, or are not able to adhere to any type of surface, with the added risk of obtaining a non-uniform finish. Document US 3 457 202 A discloses a composition comprising granulated cork, granulated rubber, an epoxy resin, triethylene glycol (which is added as a flexibiliser, a thermoplastic polyamide resin which has amine groups that are reactive with the epoxy(glycidyl) groups of the epoxy resin.

Therefore, an object of the present invention will be to present a new formulation based on resins, characterized by comprising a two-component system where at least one of the ingredients will be an organic and/or inorganic additive with insulating properties.

A method of application of said formulation will also be an object of the invention , which is characterized by comprising the mixture of the two-component system and its subsequent homogenization, prior to its application.

Making use of the formulation as an insulating material, due to the good adhesion properties it has on most materials (mortar, metal, wood, PVC, expanded polyethylene, etc.), will finally be an object of the invention.

### DESCRIPTION OF THE INVENTION

The present invention relates to a formulation characterized in that it comprises:
a) a component A, wherein said component A comprises at least one thermoplastic resin and at least one additive selected from a group consisting of cork, plasticizers, dispersants and mineral fillers, or any combination thereof.
b) a component B, wherein said component B comprises at least one thermoplastic resin and at least one crosslinking additive

The thermoplastic resin of component A is selected from acrylic resins and any combination of epoxy resins and acrylic resins. The weight percent of epoxy resin in the component is comprised between 1 and 16% by weight of component A. With respect to the acrylic resin, it is comprised between 20 and 65%, and more preferably between 40 and 48% by weight of component A.

As for the additives used, in a preferred embodiment of the invention the plasticizers will be selected from hydroxyethylcellulose and methylcellulose and they will be comprised, preferably between 0.05 and 10%, more preferably between 0.2 to 2% by weight of component A.

In turn, the dispersing elements will be selected, preferably, between polyphosphates, ethoxylated nonylphenols and magnesium carbonate, which will be in a preferred percentage of 0.05 to 20%, more preferably 1 to 10% by weight of component A.

Regarding the mineral fillers, these may consist, in turn, of non-insulating mineral fillers, and insulating mineral fillers. Non-insulating mineral fillers, preferably, will in turn be selected from a group consisting of carbonates, silicates, titanium dioxide or any combination thereof, preferably in a percentage between 1 and 40%, more preferably between 5 and 30% by weight of component A. In turn, the insulating mineral fillers will be selected, preferably from perlite and vermiculite, preferably in a percentage comprised between 0.1 and 40%, more preferably between 0.5 and 30% by weight of component A.

Finally, cork will be used, preferably as grain cork, and will be comprised between 5 and 25%, more preferably between 8 and 15% by weight of component A.

In a particular embodiment of the invention, component A will include, in turn, granulated pine bark, preferably at a percentage comprised between 3 and 15% by weight of component A.

In turn, the thermoplastic resin of component B will be selected, preferably from polyurethane, polyaziridine and n-methylpyrrolidone resins, or any combination thereof, preferably in a percentage comprised between 1 and 30%, more preferably between 5 and 20% by weight of component B. In turn, crosslinkers will consist, preferably of acrylic group crosslinkers, which will be in a percentage preferably comprised between 0.5 and 20%, more preferably between 1 and 10% by weight of component B.

In a particularly preferred embodiment, the formulation of the invention will comprise:
a) a component A, where the component A comprises, in weight percentage with respect to the total of component A

| **Component** | **Wt%** |
|---|---|
| Epoxy resin | 1-16 |
| Acrylic resin | 40-48 |
| Plasticizers | 0.2-2 |
| Non-insulating mineral fillers | 5-30 |
| Insulating mineral fillers | 0.5-30 |
| Dispersants | 1-10 |
| Cork | 8-15 |

b) a component B, where said component B comprises:

| **Component** | **Wt%** |
|---|---|
| Polyurethane resin | 5-20 |
| Crosslinkers | 1-10 |

In a particular embodiment of the invention, the formulation may further comprise other materials, preferably selected from the materials commonly used in construction. These materials will consist, preferably, of at least one binder selected from a group consisting of cement, plaster, lime and any combination thereof or derivatives thereof.

Regarding the particular characteristics of the formulation, it is characterized in that it has a pasty appearance and a density comprised between 0.5 and 0.7 g/cm³ (at 20 °C)

An additional object of the invention will be the method of application in situ of the formulation described above, which is characterized in that it comprises the following stages:
a) the mixing and homogenization of the ingredients of component A;
b) the mixing and homogenization of the ingredients of component B;
c) the mixing of component A and component B until obtaining a uniform mixture;
d) the application of said uniform mixture over a surface.

Both stage (a) and stage (b) of mixing and homogenization of the ingredients are carried out, preferably, separately, preferably using at least a surfactant system selected from ethoxylated fatty alcohols and ethoxylated nonylphenols in a percentage, preferably between 0.5 and 3% of the mixture. Likewise, in addition at least one emulsifier will be preferably used , preferably coconut amides, in order to prevent redeposition of the ingredients.

In turn, preferably, the mixing of the ingredients will be carried out by means of a variable speed planetary machine, preferably at a speed comprised between 200 and 500 rpm.

In a preferred embodiment of the invention in which the thermoplastic resins consist of epoxy resins and acrylic resins, stage (a) of mixing the ingredients of component A will comprise, in turn, the following steps:
a) the formation of an emulsion between the mineral fillers and acrylic resins;
b) the addition of said emulsion to the epoxy resins and the homogenization of the mixture obtained;
c) the addition of water and other additives, except for the cork, to the previous mixture and further homogenization;
d) the addition of cork;

In a particular embodiment in which component A further comprises granulated pine bark, this will be added in stage (d), together with the addition of cork.

With respect to component B, the mixture of its ingredients will be carried out, preferably, in at least one planetary machine independent from the previous one, by adding all the ingredients of component B to it. In this case, these ingredients will be added, preferably in a liquid state. In particular, said mixture may be carried out in the presence of a dispersant, preferably selected from water-based polyurethane, polyaziridine and nonionic water-soluble polyurethanes, or any combination thereof. In a preferred embodiment, the percentage of said dispersants will be comprised between 1 and 30% water-based polyurethane, 0.5 and 3% polyaziridine and 0.3 and 1% non-ionic water-soluble polyurethanes.

Finally, the mixture of component A and component B will be carried out preferably by using a blender or mixer, and its application on a surface will be preferably performed mechanically, by spraying with a machine or manually, preferably with trowel or spatula.

Use of the aqueous emulsion object of the invention as an insulating material will be an additional object of the invention, due to the good adhesion properties it has on most materials such as, for example, mortar, metal, wood, PVC, expanded polyethylene and so on. In this way, it will be used, preferably, in the following applications:
- Façade coating, decorating it and insulating it thermally;
- Roof waterproofing of all kinds, preferably, asphalt, sheet or corrugated metal, insulating them thermally at the same time;
- Interior decoration and building acoustics correction.

The previous list is a non-limiting example of the many possible applications of the formulation object of the invention.

Among the many advantages of this new formulation with respect to similar products in the state of the art, it is worth noting the following:
- insulating applications are achieved on all types of surfaces thanks to the additives incorporated in the resins that allow for greater adhesion to the substrate;
- decorative applications are achieved in a single coating application, achieving thicknesses of up to 12 mm;
- homogeneous finishes are achieved, avoiding areas of differential texture and gloss;
- a greater stability of the product to external chemical agents is achieved due to the mixture of epoxy and polyurethane resins;
- the incorporation of insulating mineral fillers contributes to the insulating properties of cork while improving its fire resistance;
- being a two-component system, is improved over conventional systems:
   - the stability of the preparation;
   - the reaction between the different components is better regulated, thereby controlling the flexibility, reaction time and strength;
   - the drying times of the mixture are significantly lower than the styrene acrylic systems;
- finally, by adding epoxy and polyurethane resins to the formulation achieves preventing the inconveniences arising from the use of the formulations based solely on vinyl and styrenic acrylic resins with which oozings in relatively small thicknesses from 1.5 to 3mm are created, which can cause glare and non-homogeneous areas with the consequent loss of aesthetic properties.

The following are a few examples, by way of illustration and in a non-limiting way, in order to achieve a better understanding of the invention.

### Example 1.- Technical characterization of the formulation

In this first example, we proceeded to determine the technical characteristics of the formulation object of protection, obtaining the results shown in the table below:

| | | |
|---|---|---|
| Dry at touch | 30 minutes (20°C) | |
| Total drying | 12-24h (3-8 mm layer) | |
| Performance | 1.2-1.5 kg/m² (variable) | |
| Application temperature | -2°C and +45°C | |
| Expansion supported | 25-35% | UNE 53-112/98 |
| Temperature coefficient A | 0.054 kCal/hm °C | Fourier Law |
| Fire classification | M1 | UNE EN 13501-1:2007 |
| Reaction to fire classification | Broof(t1) | UNE EN 13501-5:2005 (*) |
| Cleaning utensils | Fresh (by water); | |
| | Dry (mechanical means) | |
| Dilution | In water | |

| | | |
|---|---|---|
| (*)Note: The fire classification was carried out with respect to the UNE EN 13501-1:2007, EN 13823:2002 and UNE EN ISO 11925-2:2002. The obtained fire classification was: B-s2 d0. | | |

### Example 2.- Technical characterization of the formulation

In a second example, a series of additional tests were conducted, including tests of thermal and acoustic insulation, with the following results:

| | | |
|---|---|---|
| Elongation | 10-27% | |
| Permeability | Waterproof | UNE EN 1062-3:2008 |
| Perspiration | 80% breathable | UNE EN 12086:1998 |
| Acoustic isolation | 10-15 dB (4 mm layer) | UNE EN ISO 140-3:1995 |
| Adherence to traction | | UNE EN ISO 4892-3:2006 |
| Concrete | 12.60 kg/cm² | |
| Fiber cement | 10.20 kg/cm² | |
| Mortar | 14.60 kg/cm² | |
| Ceramic tile | 12.15 kg/cm² | |
| Thermal insulation | | |
| Thermal conductivity A | 0.054 kCal/h°cm | Fourier Law |

## Claims

1. Formulation **characterized in that** it comprises:
a) a component A, wherein said component A comprises at least one thermoplastic resin selected from i) acrylic resins in a percentage by weight in component A comprised between 20 and 65% and ii) a combination of epoxy resins in a percentage by weight in component A comprised between 1 and 16 % and acrylic resins in a percentage by weight in component A comprised between 40 and 48 %; cork in a percentage by weight in component A comprised between 5 and 25%; and least one additive selected from a group consisting of plasticizers, dispersants and mineral fillers, or any combination thereof;
b) a component B, wherein said component B comprises at least one thermoplastic resin and at least one crosslinking additive.

2. Formulation according to claim 1, **characterized in that** the plasticizers are selected from methylcellulose and hydroxyethylcellulose.

3. Formulation according to any one of claims 1 or 2, **characterized in that** the percentage by weight of the plasticizers in component A is comprised between 0.05 and 10%.

4. Formulation according to claim 1, **characterized in that** the dispersant elements are selected from polyphosphates, ethoxylated nonylphenols and magnesium carbonate.

5. Formulation according to any one of claims 1 or 4, **characterized in that** the percentage by weight of the dispersant elements in component A is comprised between 0.05 and 20%.

6. Formulation according to claim 1, **characterized in that** the mineral fillers are selected from a group consisting of carbonates, silicates, titanium dioxide or any combination thereof.

7. Formulation according to any one of claims 1 or 6, **characterized in that** the percentage by weight of the mineral fillers in component A is comprised between 1 and 40%.

8. Formulation according to claim 1, **characterized in that** the mineral fillers have insulating properties.

9. Formulation according to any one of claims 1 or 8, **characterized in that** the percentage by weight of the insulating mineral fillers in component A is comprised between 0.1 and 40%.

10. Formulation according to claim 1, **characterized in that** the component A also includes granulated pine bark.

11. Formulation according to claim 1, **characterized in that** the thermoplastic resin of component B is selected from polyurethane, polyaziridine and n-methylpyrrolidone resins, or any combination thereof.

12. Formulation according to any one of claims 1 or 11, **characterized in that** the percentage by weight of the thermoplastic resin in component B is comprised between 1 and 30%.

13. Formulation according to claim 1, **characterized in that** the percentage by weight of the crosslinkers in component B is comprised between 0.5 and 20%.

14. Formulation according to claim 1, **characterized in that** it comprises:
a) a component A, wherein the component A comprises, in turn, in percent by weight of component A:
| | |
|---|---|
| Epoxy resin | 1-16 |
| Acrylic resin | 40-48 |
| Plasticizers | 0.2-2 |
| Non-insulating mineral fillers | 5-30 |
| Insulating mineral fillers | 0.5-30 |
| Dispersants | 1-10 |
| Cork | 8-15 |
b) a component B, wherein the component B comprises, in turn, in percent by weight of component B:
| | |
|---|---|
| Polyurethane resin | 5-20 |
| Crosslinkers | 1-10 |

15. Formulation according to any one of the preceding claims, **characterized in that** it comprises, furthermore, at least one binder selected from a group consisting of cement, plaster, lime, or any combination thereof or of derivatives of the same.

16. Method of application in situ of the formulation according to any one of the preceding claims, **characterized in that** it comprises the following stages:
a) mixing and homogenization of the ingredients of component A;
b) mixing and homogenization of the ingredients of component B;
c) mixing of component A and component B until obtaining a uniform mixture;
d) application of said uniform mixture over a surface.

17. Method according to claim 16, **characterized in that** both stage (a) and stage (b) of mixing and homogenization comprise the addition of at least one surfactant system and/or at least one emulsifier.

18. Method according to claim 16, **characterized in that**, when the thermoplastic resins consist of epoxy resins and acrylic resins, the mixing stage of the ingredients of component A comprises, in turn, the following steps:
a) formation of an emulsion between the mineral fillers and the acrylic resins;
b) addition of said emulsion to the epoxy resins and the homogenization of the mixture obtained;
c) addition of water and other additives, except for the cork, to the previous mixture and further homogenization;
d) addition of cork.

19. Method according to claim 16, wherein stage (d) of application of the formulation on a surface is carried out by spraying with a machine or by hand.

20. Use of the formulation according to any one of claims 1 to 15, as an insulating material.

## Patentansprüche

1. Formulierung, **dadurch gekennzeichnet, dass** sie umfasst:
a) eine Komponente A, wobei die Komponente A mindestens ein thermoplastisches Harz umfasst, ausgewählt aus i) Acrylharzen in einem Gewichtsanteil in der Komponente A zwischen 20 und 65 % und ii) eine Kombination von Epoxidharzen in einem Gewichtsanteil in der Komponente A zwischen 1 und 16 % und Acrylharzen in einem Gewichtsanteil in der Komponente A zwischen 40 und 48 %; Kork in einem Gewichtanteil in der Komponente A zwischen 5 und 25 %; und mindestens ein Additiv, ausgewählt aus einer Gruppe bestehend aus Weichmachern, Dispergiermitteln und mineralischen Füllstoffen oder einer Kombination davon;
b) eine Komponente B, wobei die Komponente B mindestens ein thermoplastisches Harz und mindestens ein Vernetzungsadditiv umfasst.

2. Formulierung nach Anspruch 1, **dadurch gekennzeichnet, dass** die Weichmacher aus Methylcellulose und Hydroxyethylcellulose ausgewählt sind.

3. Formulierung nach einem der Ansprüche 1 oder 2, **dadurch gekennzeichnet, dass** der Gewichtsanteil der Weichmacher in der Komponente A zwischen 0,05 und 10 % liegt.

4. Formulierung nach Anspruch 1, **dadurch gekennzeichnet, dass** die Dispergierelemente aus Polyphosphaten, ethoxylierten Nonylphenolen und Magnesiumcarbonat ausgewählt sind.

5. Formulierung nach einem der Ansprüche 1 oder 4, **dadurch gekennzeichnet, dass** der Gewichtsanteil der Dispergierelemente in der Komponente A zwischen 0,05 und 20 % liegt.

6. Formulierung nach Anspruch 1, **dadurch gekennzeichnet, dass** die mineralischen Füllstoffe aus einer Gruppe ausgewählt sind, bestehend aus Carbonaten, Silikaten, Titandioxid oder einer beliebigen Kombination davon.

7. Formulierung nach einem der Ansprüche 1 oder 6, **dadurch gekennzeichnet, dass** der Gewichtsanteil der mineralischen Füllstoffe in der Komponente A zwischen 1 und 40 % liegt.

8. Formulierung nach Anspruch 1, **dadurch gekennzeichnet, dass** die mineralischen Füllstoffe isolierende Eigenschaften aufweisen.

9. Formulierung nach einem der Ansprüche 1 oder 8, **dadurch gekennzeichnet, dass** der Gewichtsanteil der isolierenden mineralischen Füllstoffe in der Komponente A zwischen 0,1 und 40 % liegt.

10. Formulierung nach Anspruch 1, **dadurch gekennzeichnet, dass** die Komponente A des Weiteren granulierte Kiefernrinde enthält.

11. Formulierung nach Anspruch 1, **dadurch gekennzeichnet, dass** das thermoplastische Harz der Komponente B aus Polyurethan-, Polyaziridin- und n-Methylpyrrolidon-Harzen oder einer beliebigen Kombination davon ausgewählt ist.

12. Formulierung nach einem der Ansprüche 1 oder 11, **dadurch gekennzeichnet, dass** der Gewichtsanteil des thermoplastischen Harz in der Komponente B zwischen 1 und 30 % liegt

13. Formulierung nach Anspruch 1, **dadurch gekennzeichnet, dass** der Gewichtsanteil der Vernetzer in der Komponente B zwischen 0,5 und 20 % liegt.

14. Formulierung nach Anspruch 1, **dadurch gekennzeichnet, dass** sie umfasst:
a) eine Komponente A, wobei die Komponente A wiederum in Gewichtsprozent der Komponente A umfasst:
| | |
|---|---|
| Epoxidharz | 1-16 |
| Acrylharz | 40-48 |
| Weichmacher | 0,2-2 |
| Nicht isolierende mineralische Füllstoffe | 5-30 |
| Isolierende mineralische Füllstoffe | 0,5-30 |
| Dispergiermittel | 1-10 |
| Kork | 8-15 |
b) eine Komponente B, wobei die Komponente B wiederum in Gewichtsprozent der Komponente B umfasst:
| | |
|---|---|
| Polyurethanharz | 5-20 |
| Vernetzer | 1-10 |

15. Formulierung nach einem der vorangehenden Ansprüche, **dadurch gekennzeichnet, dass** sie des Weiteren mindestens ein Bindemittel umfasst, ausgewählt aus einer Gruppe, die aus Zement, Gips, Kalk oder einer Kombination derselben oder aus Derivaten derselben besteht.

16. Verfahren zum in situ Auftragen der Formulierung nach einem der vorangehenden Ansprüche, **dadurch gekennzeichnet, dass** es die folgenden Schritte umfasst:
a) Mischen und Homogenisieren der Bestandteile der Komponente A;
b) Mischen und Homogenisieren der Bestandteile der Komponente B;
c) Mischen der Komponente A und Komponente B, bis eine einheitliche Mischung erhalten wird;
d) Auftragen der einheitlichen Mischung auf eine Oberfläche.

17. Verfahren nach Anspruch 16, **dadurch gekennzeichnet, dass** sowohl der Schritt (a) als auch der Schritt (b) des Mischens und Homogenisierens die Zugabe von mindestens einem Tensidsystem und/oder mindestens einem Emulgator umfasst.

18. Verfahren nach Anspruch 16, **dadurch gekennzeichnet, dass**, wenn die thermoplastischen Harze aus Epoxidharzen und Acrylharzen bestehen, der Mischschritt der Bestandteile der Komponente A wiederum die folgenden Schritte umfasst:
a) Bilden einer Emulsion zwischen den mineralischen Füllstoffen und den Acrylharzen;
b) Zugeben der Emulsion zu den Epoxidharzen und Homogenisieren der erhaltenen Mischung;
c) Zugeben von Wasser und anderen Zusatzstoffen, mit Ausnahme des Korks, zur vorherigen Mischung, und weiteres Homogenisieren;
d) Zugeben von Kork.

19. Verfahren nach Anspruch 16, wobei der Schritt (d) des Auftragens der Formulierung auf eine Oberfläche durch Sprühen mit einer Maschine oder von Hand durchgeführt wird.

20. Verwendung der Formulierung nach einem der Ansprüche 1 bis 15 als Isoliermaterial.

## Revendications

1. Formulation **caractérisée en ce qu'**elle comprend :
a) un constituant A, dans laquelle ledit constituant A comprend au moins une résine thermoplastique choisie parmi i) des résines acryliques dans un pourcentage en masse dans le constituant A de 20 à 65 % et ii) une combinaison de résines époxy dans un pourcentage en masse dans le constituant A de 1 à 16 % et de résines acryliques dans un pourcentage en masse dans le constituant A de 40 à 48 % ; du liège dans un pourcentage en masse dans le constituant A de 5 à 25 % ; et au moins un additif choisi dans un groupe consistant en plastifiants, dispersants et charges minérales, ou une combinaison quelconque de ceux-ci ;
b) un constituant B, dans laquelle ledit constituant B comprend au moins une résine thermoplastique et au moins un additif de réticulation.

2. Formulation selon la revendication 1, **caractérisée en ce que** les plastifiants sont choisis parmi la méthylcellulose et l'hydroxyéthylcellulose.

3. Formulation selon l'une quelconque des revendications 1 ou 2, **caractérisée en ce que** le pourcentage en masse des plastifiants dans le constituant A est de 0,05 à 10 %.

4. Formulation selon la revendication 1, **caractérisée en ce que** les éléments de dispersants sont choisis parmi des polyphosphates, des nonylphénols éthoxylés et du carbonate de magnésium.

5. Formulation selon l'une quelconque des revendications 1 ou 4, **caractérisée en ce que** le pourcentage en masse des éléments de dispersants dans le constituant A est de 0,05 à 20 %.

6. Formulation selon la revendication 1, **caractérisée en ce que** les charges minérales sont choisies dans un groupe consistant en carbonates, silicates, dioxyde de titane ou une combinaison quelconque de ceux-ci.

7. Formulation selon l'une quelconque des revendications 1 ou 6, **caractérisée en ce que** le pourcentage en masse des charges minérales dans le constituant A est de 1 à 40 %.

8. Formulation selon la revendication 1, **caractérisée en ce que** les charges minérales présentent des propriétés isolantes.

9. Formulation selon l'une quelconque des revendications 1 ou 8, **caractérisée en ce que** le pourcentage en masse des charges minérales isolantes dans le constituant A est de 0,1 à 40 %.

10. Formulation selon la revendication 1, **caractérisée en ce que** le constituant A comprend également de l'écorce de pin granulée.

11. Formulation selon la revendication 1, **caractérisée en ce que** la résine thermoplastique de constituant B est choisie parmi des résines de polyuréthane, polyaziridine et n-méthylpyrrolidone, ou une combinaison quelconque de ceux-ci.

12. Formulation selon l'une quelconque des revendications 1 ou 11, **caractérisée en ce que** le pourcentage en masse de la résine thermoplastique dans le constituant B est de 1 à 30 %.

13. Formulation selon la revendication 1, **caractérisée en ce que** le pourcentage en masse des réticulants dans le constituant B est de 0,5 à 20 %.

14. Formulation selon la revendication 1, **caractérisée en ce qu'**elle comprend :
a) un constituant A, dans laquelle le constituant A comprend, à son tour, en pourcentage en masse de constituant A :
| | |
|---|---|
| Résine époxy | 1-16 |
| Résine acrylique | 40-48 |
| Plastifiants | 0,2-2 |
| Charges minérales non isolantes | 5-30 |
| Charges minérales isolantes | 0,5-30 |
| Dispersants | 1-10 |
| Liège | 8-15 |
b) un constituant B, dans laquelle le constituant B comprend, à son tour, en pourcentage en masse de constituant B :
| | |
|---|---|
| Résine de polyuréthane | 5-20 |
| Réticulants | 1-10 |

15. Formulation selon l'une quelconque des revendications précédentes, **caractérisée en ce qu'**elle comprend, de plus, au moins un liant choisi dans un groupe consistant en ciment, plâtre, chaux, ou une combinaison quelconque de ceux-ci ou de dérivés de ceux-ci.

16. Procédé d'application in situ de la formulation selon l'une quelconque des revendications précédentes, **caractérisé en ce qu'**il comprend les étapes suivantes de :
a) mélange et homogénéisation des ingrédients de constituant A ;
b) mélange et homogénéisation des ingrédients de constituant B ;
c) mélange des constituant A et constituant B jusqu'à l'obtention d'un mélange uniforme ;
d) application dudit mélange uniforme sur une surface.

17. Procédé selon la revendication 16, **caractérisé en ce que** les deux étapes (a) et étape (b) de mélange et homogénéisation comprennent l'addition d'au moins un système de tensioactif et/ou d'au moins un émulsionnant.

18. Procédé selon la revendication 16, **caractérisé en ce que**, lorsque les résines thermoplastiques consistent en résines époxy et résines acryliques, l'étape de mélange des ingrédients de constituant A comprend, à son tour, les étapes suivantes :
a) formation d'une émulsion entre les charges minérales et les résines acryliques ;
b) addition de ladite émulsion aux résines époxy et l'homogénéisation du mélange obtenu ;
c) addition d'eau et d'autres additifs, à l'exception du liège, au mélange précédent et homogénéisation supplémentaire ;
d) addition de liège.

19. Procédé selon la revendication 16, dans lequel l'étape (d) d'application de la formulation sur une surface est réalisée par pulvérisation avec une machine ou à la main.

20. Utilisation de la formulation selon l'une quelconque des revendications 1 à 15, comme un matériau isolant.
